# EUROPÄISCHE PATENTSCHRIFT

(11) **EP 2 986 973 B1**
(45) Veröffentlichungstag und Bekanntmachung des Hinweises auf die Patenterteilung: **02.08.2017**
(21) Anmeldenummer: 14719681.0
(22) Anmeldetag: 16.04.2014
(51) Int. Cl.: G01N 21/90, B07C 5/34, G01N 21/93

(54) **TESTBEHÄLTNIS ZUM TESTEN VON INSPEKTIONSEINRICHTUNGEN**
TEST CONTAINER FOR TESTING INSPECTION DEVICES
RÉCIPIENT D'ESSAI SERVANT À TESTER DES MACHINES DE CONTRÔLE

(30) Priorität: 19.04.2013 DE 102013103992
(43) Veröffentlichungstag der Anmeldung: 24.02.2016
(73) Patentinhaber: Krones AG, 93073 Neutraubling (DE)
(72) Erfinder: NIEDERMEIER, Anton, 93073 Neutraubling (DE)
(74) Vertreter: Bittner, Bernhard
(86) Internationale Anmeldenummer: PCT/EP2014/057716
(87) Internationale Veröffentlichungsnummer: WO 2014/170365

(56) Entgegenhaltungen:
- EP-A1- 0 043 330
- EP-A1- 2 392 906
- EP-A1- 2 581 732
- DE-A1- 19 602 655
- DE-A1- 19 946 080
- DE-U1- 29 910 452

## Beschreibung

Die vorliegende Erfindung bezieht sich auf ein Behältnis und insbesondere ein Testbehältnis zum Testen von Inspektionsanlagen. Im Stand der Technik ist es oftmals erforderlich, hergestellte und insbesondere befüllte Behältnisse auf bestimmte Fehler hin zu untersuchen, beispielsweise auf das Vorhandensein von Glasscherben innerhalb des Behältnisses oder auf das Vorhandensein von Verunreinigungen. Zu diesem Zweck durchlaufen die zu untersuchenden Behältnisse diese Inspektionseinrichtungen und es wird festgestellt, ob bestimmte Fehler vorliegen. Allerdings ist es auch erforderlich, die Genauigkeit derartiger Inspektionsanlagen zu untersuchen. Zu diesem Zweck werden Originalbehältnisse verwendet und diese mit einer Testverunreinigung versehen. Wenn die Inspektionseinrichtung dieses Behältnis erkennt, kann davon ausgegangen werden, dass die Inspektionseinrichtung ordnungsgemäß verläuft. Das Problem derartiger Behältnisse besteht jedoch darin, dass sich die Behältnisse relativ schnell abnutzen, da das in diesem befindliche Produkt mit Keimen belastet ist. Diese können sich in den meisten Getränken explosionsartig vermehren und damit das Testbehältnis unbrauchbar machen. Werden nicht gefüllte Behältnisse verwendet, so sind die Testergebnisse oft von minderer Aussagekraft, vor allem deshalb, da der Brechungsindex der Flüssigkeit wesentlich andere optische Anordnungen erfordert, als leere Behältnisse.

Testbehältnisse zum Testen von Inspektionsaulagen sind beispielsweise aus den Druckschriften EP 2581732 A1, DE 196 02 655 A1, DE 199 46 080 A1, DE 299 10 452 41 bekannt.

Weiterhin werden im Stand der Technik permanent die Leistungen erhöht und damit auch der Durchsatz von Behältnissen pro Zeiteinheit. Wenn die Testbehältnisse mit einem für den Genuss besonders interessanten Produkt gefüllt sind, wie beispielsweise alkoholische Getränke und sonstige Premiumprodukte, besteht die Gefahr, dass ein derartiges Testbehältnis die Inspektionseinrichtung passiert und später nicht mehr erkannt wird.

Daher liegt der vorliegenden Erfindung die Aufgabe zugrunde, Vorsorge dahingehend zu treffen, dass aus Sicherheitsgründen das Behältnis nicht irrtümlich geöffnet und der Inhalt verzehrt wird. Dies ist insbesondere wichtig, weil das Produkt verdorben oder weitaus schlimmer mit Testschmutz versehen sein kann. Bei diesem Testschmutz kann es sich beispielsweise um Gummiteile, aber auch um Glas- oder Stahlkügelchen handeln oder um Glasfragmente. Daneben wird teilweise auch zur Schwebstofferkennung Zellophan oder dergleichen in die Behältnisse eingebracht. Die Größe dieser eingebrachten festen Körper beträgt beispielsweise 5x5x5 mm bis hinab zu 1x1x1 mm oder auch 3,0 x 0,5 mm bei Glasfragmenten. Diese Produkte können jedoch bei Genuss durch den Menschen sehr schädlich sein.

Der vorliegenden Erfindung liegt daher die Aufgabe zugrunde, einen versehendlichen Genuss des Inhalts derartiger Testbehältnisse durch den Benutzer zu vermeiden.

Dies wird erfindungsgemäß durch ein Behältnis nach dem unabhängigen Anspruch erreicht. Vorteilhafte Ausführungsformen und Weiterbildungen sind Gegenstand der Unteransprüche.

Ein erfindungsgemäßes Testbehältnis zum Überprüfen von Behältnisse prüfende Inspektionsmaschinen bzw. Behältnis-Inspektionsmaschinen, wobei diese Inspektionsmaschinen geeignet sind, wenigstens eine erste Gattung an Behältnissen auf das Vorhandensein von Fremdkörpern zu untersuchen, weist einen Grundkörper auf, in dem eine Flüssigkeit angeordnet ist. Weiterhin weist das Testbehältnis eine Mündung auf, über welche die Flüssigkeit in das Behältnis einführbar ist sowie einen ersten Verschluss, mittels dem das Behältnis verschlossen ist. Dabei ist in dem Behältnis wenigstens ein von der Inspektionsmaschine insbesondere optisch erfassbarer Fremdkörper angeordnet.

Erfindungsgemäß weist das Behältnis und/oder die darin angeordnete Flüssigkeit ein Erkennungsmittel auf, welches von einem Benutzer und/oder einer Erkennungseinrichtung erfassbar ist, um so das Testbehältnis als sich von einem andern zu inspizierenden Behältnis der Gattung zu unterscheiden.

Es wird daher ein Testbehältnis vorgeschlagen, welches es auch bei hohen Produktionsgeschwindigkeiten verhindert, dass das Testbehältnis später von einem Nutzer geöffnet und insbesondere dessen Inhalt konsumiert wird. Dabei ist es einerseits denkbar, dass das Erkennungsmittel durch eine Maschine erkennbar ist, die insbesondere stromabwärts der Inspektionsmaschine angeordnet ist, es ist jedoch auch möglich, dass die Flüssigkeit selbst durch einen Benutzer, insbesondere bereits vor deren Genuss, als nicht für den Verzehr geeignet erkannt wird.

Vorteilhaft handelt es sich bei dem Behältnis um ein wenigstens teilweise transparentes Behältnis, beispielsweise eine Glasflasche oder eine Kunststoffflasche, die für Licht, insbesondere Licht im sichtbaren Wellenlängenbereich wenigstens teilweise transparent ist. Vorteilhaft handelt es sich auch bei der Flüssigkeit um eine wenigstens teilweise für Licht im sichtbaren Wellenlängenbereich transparente Flüssigkeit.

Bei einer weiteren vorteilhaften Ausführungsform befindet sich in der Flüssigkeit eine weitere Substanz, welche ein Unterscheiden des Behältnisses auf Basis eines Geschmackes und/oder Geruches und insbesondere eines Geruches der Flüssigkeit ermöglicht. Im Stand der Technik kann es vorkommen, dass Testflaschen bei einer Fehlfunktion der Vollflascheninspektion in eine Etikettiermaschine gelangen und dort zu einem verkaufsfähigen Produkt ausgestattet werden. So kann es beispielsweise geschehen, dass eventuell vorhandene Testbehältnismarkierungen überetikettiert werden und somit für niemanden mehr die Brisanz des Inhaltes offensichtlich ist.

Bei einer weiteren vorteilhaften Ausführungsform ist die weitere Substanz aus einer Gruppe von Substanzen ausgewählt, welche Aceton, Rohpyridin, Kristallviolett, Fuselöl, Isopropylalkohol, Methylethylketon, Methylisopropyketon, Ethyl-sec-amylketon, Holzgeist, Steinöl, Methanol, Thiophen, Mischungen oder Zusammensetzungen aus diesen Substanzen und dergleichen enthält. Insbesondere hat sich Isopropylalkohol als besonders geeignet für die genannte Flüssigkeit erwiesen. Bei dieser Ausführungsform ist es möglich, dass, falls ein Behältnis tatsächlich durch die vollständige Anlage gelaufen und damit auch etikettiert wurde, dieses Behältnis durch einen Benutzer noch am Geruch sehr schnell erkannt werden kann ohne dass dieser die in dem Behältnis befindliche Flüssigkeit konsumiert. Damit wird bei dieser Ausführungsform vorteilhaft eine Vergällung der Flüssigkeit vorgenommen.

Bei einer weiteren vorteilhaften Ausführungsform sind in dem Behältnis mehrere Fremdkörper mit zueinander unterschiedlichen physikalischen Eigenschaften angeordnet. Dabei können sich diese Fremdkörper, insbesondere hinsichtlich ihrer Farbe, ihrer Dichte, ihrer Flexibilität, ihrer Größe usw. unterscheiden. Auf diese Weise können mehrere Eigenschaften der Maschinen getestet werden. So kann beispielsweise getestet werden, ob ein am Boden des Behältnisses liegender Fremdkörper erkannt wird, es kann getestet werden, ob ein Fremdkörper erkannt wird, der im Rahmen einer Bewegung des Behältnisses leichter aufgewirbelt wird, und es können Fremdkörper unterschiedlicher Farben überprüft werden.

Bei einer weiteren vorteilhaften Ausführungsform ist wenigstens ein Fremdkörper gegenüber dem Behältnis fixiert. So wäre es möglich, dass dieser Fremdkörper an die Innenwandung eines Bodens des Behältnisses angeklebt ist oder auch an einer Seitenwand des Behältnisses angeklebt ist. Auf diese Weise kann auch der genaue Ort eines Fremdkörpers in dem Behältnis während dessen Inspektion genau definiert werden.

Bei einer weiteren vorteilhaften Ausführungsform weist das Testbehältnis ein Identifikationselement auf, welches von einer Maschine erkennbar ist. Wie oben erwähnt, ist ein verlorengegangenes Testbehältnis unter Umständen nach dem Etikettieren nur noch mit extremem Aufwand zu finden. Bei Abfüllleistungen von 1.100 Behältern pro Minute ist innerhalb weniger Minuten Produktion ein Suchaufwand von mehreren Stunden entstanden. Es wird daher hier vorgeschlagen, das Testbehältnis mit einem Identifikationselement auszustatten, welches in der Lage ist, einer Empfangseinrichtung die Information zu übermitteln, dass es sich bei diesem Behältnis um ein Testbehältnis handelt. So kann vorteilhaft dieses Identifikationselement auch die Art der Verschmutzung übermitteln, um so beispielsweise in einer nachfolgenden Maschine, wie einer Etikettiermaschine als "dort nicht hingehörig" identifiziert zu werden. In der Folge wäre es möglich, dieses Behältnis wieder auszuschleusen.

So wäre es beispielsweise möglich, dass dieses Identifikationselement über einen Initiator erkennbar ist, es kann jedoch andererseits auch als Steuerelement dienen, um insbesondere in einer beliebigen Maschine nach der Inspektionsmaschine als Steuerelement zum Ausleiten zu dienen. So kann beispielsweise ein spezieller Testflaschensensor in einer Etikettiermaschine ein einfahrendes Testbehältnis als solches erkennen. Dieses kann ausgeschieden werden oder es kann ein Maschinenstopp eingeleitet werden. Entsprechendes könnte auch in nachfolgenden Maschinen, wie etwa einer Verpackungsmaschine, realisiert werden. Bevorzugt handelt es sich bei diesem Identifikationselement um ein Sendeelement, wie beispielsweise einen RFID-Tag oder dergleichen. Es wäre jedoch auch möglich, dass eine Inspektion über auch ein optisch wahrnehmbares Mittel durchgeführt wird, beispielsweise eine abweichende Farbe eines Behältnisverschlusses.

Bei einer weiteren vorteilhaften Ausführungsform weist das Behältnis einen zweiten Verschluss auf, der das Behältnis zusätzlich zu dem ersten Verschluss verschließt. So tritt im Stand der Technik das Problem auf, dass die Verschlüsse von Testbehältnissen bei mehrmaligem Einfahren durch eine Inspektionseinheit, beispielsweise durch deren Zentrierglocken, gelockert werden. In diesem Fall kann ein Gas oder auch das Produkt entweichen. Es wird daher vorgeschlagen, dass zusätzlich zu dem oben erwähnten ersten Verschluss ein zweites Verschlusselement, insbesondere in dem Behältnis, angeordnet wird. Vorteilhaft sind dabei beide Verschlüsse geeignet, das Behältnis zu verschließen, sodass an sich der zweite Verschluss redundant ist. Dieser zweite Verschluss stellt ein weiteres Sicherheitsmittel dar, um zu vermeiden, dass aus dem Behältnis Produkt entweicht und um auch zu vermeiden, dass ein Benutzer den Inhalt des Behältnisses konsumiert. Dabei kann dieser zweite Verschluss auch das oben erwähnte Identifikationsmittel aufweisen. Bei dem ersten Verschluss handelt es sich insbesondere um einen Verschluss, der wenigstens abschnittsweise an einer Aussenwandung des Behältnisses anliegt, wie etwa einen Schraubverschluss, der auf ein am dem Behältnis angeordnetes Aussengewinde aufgeschraubt ist oder etwa einen Kronenkorken.

Vorteilhaft ist der zweite Verschluss innerhalb eines Mündungsbereichs des Testbehältnisses angeordnet. Dabei kann dieser Verschluss beispielsweise ein spannbares Verschlusselement sein, welches im Flaschenhals angeordnet wird. So kann beispielsweise der Verschluss ein Gummielement sein, das mittels Spannen über zwei Druckplatten fest in den Behältnishals verankert wird. So könnte in dieses relativ große Element auch das Identifikationselement eingebaut werden. Auch wäre es möglich, dass an diesem zweiten Verschlusselement definiert Testkörper angeordnet sind. So wäre es beispielswiese denkbar, dass an diesem Verschlusselement über einen (insbesondere transparenten) Stangenkörper auch ein Testkörper angeordnet ist, um diesen so innerhalb der Flüssigkeit an einer definierten Position anzuordnen.

Bei einer weiteren vorteilhaften Ausführungsform weist die Flüssigkeit in dem Behältnis wenigstens eine Substanz mit einer keimabtötenden Wirkung auf. Grundsätzlich wird man bei einem derartigen Testverhältnis versuchen, ein Füllmedium zu verwenden oder zu schaffen, welches dem eigentlichen verwendeten Produkt in Aussehen und Brechungsindex ähnlich ist. Es wird hier jedoch vorgeschlagen, zumindest auch eine Flüssigkeit zu verwenden, welche die Vermehrung von Keimen für einen längeren Zeitraum verhindert. So könnte beispielsweise als Ersatz für Bier eine vergällte, gefärbte, hochprozentige Alkohollösung verwendet werden. Daneben wäre es auch denkbar, dass der mit dem Testschmutz präparierte, gefüllte und verschlossene Behälter solange einer Behandlung unterzogen wird, bis alle vermehrungsfähigen Keime deaktiviert sind.

Somit ist bevorzugt das Testbehältnis ein wenigstens teilweise unter sterilen Bedingungen hergestelltes (und bevorzugt auch befülltes) Testbehältnis. So kann beispielsweise das Testbehältnis selbst unter sterilen Bedingungen hergestellt worden sein, es wäre jedoch auch möglich, dass die Flüssigkeit in dem Behältnis unter sterilen Bedingungen abgefüllt wurde und/oder auch der Verschluss des Behältnisses unter sterilen Bedingungen gefertigt und an dem Behältnis angebracht wurde.

Auf diese Weise kann eine Keimfreiheit und damit auch eine längere Haltbarkeit erzielt werden. Bei dieser Behandlung kann es sich beispielsweise um eine thermische Behandlung bzw. ein schlichtes Erwärmen auf knapp unter dem Siedepunkt für ein paar Stunden handeln, welches die Vermehrung von Keimen effektiv bremst. Auch ist eine andere in das Medium eindringende Strahlungsart, die zur Entkeimung oder zur Sterilisation verwendet wird, denkbar, wie beispielsweise UV-Licht oder auch Elektronenbestrahlung. Daneben können, wie oben erwähnt, auch die Testbehältnisse selbst unter Reinbedingungen gefertigt werden, und, wie erwähnt, sterile Flüssigkeit, keimfreier Testschmutz (wie Gummi, Glasscherben und Stahlkugeln) schimmelresistenter Kleber usw. verwendet werden.

Vorteilhaft handelt es sich bei dem Testbehältnis um ein Kunststoffbehältnis oder ein Glasbehältnis. So kann jedoch auch das Glas selbst vor dem Einbringen der Flüssigkeit behandelt worden sein. So könnte beispielsweise der Glaskörper aufgeraut oder rau gemacht worden sein oder auch die insbesondere Innenwand des Behältnisses mittels Ätzen, Lasern oder auch durch Einschlüsse in Glas oder thermisches Einwirken behandelt worden sein.

Bei einer weiteren vorteilhaften Ausführungsform können die Behältnisse auch mit Merkmalen ausgestattet sein, wie beispielsweise einer zweidimensionalen oder Transponder-Codierung oder auch einer Codierung, welche Aufschluss über die zu erreichenden Fehlersummen oder Fehlerorte gibt.

Insgesamt wird dadurch ein Testbehältnis zur Verfügung gestellt, welches einerseits sicher in der Handhabung ist, andererseits jedoch auch über einen längeren Zeitraum hinweg einsetzbar ist.

Weitere Vorteile und Ausführungsformen ergeben sich aus den beigefügten Zeichnungen. Darin zeigen:
- Fig. 1: Eine Darstellung eines erfindungsgemäßen Behältnisses;
- Fig. 2: eine Detailansicht des Behältnisses aus Fig. 1 und
- Fig. 3: eine Darstellung eines Wandungsabschnitts des Behältnisses.

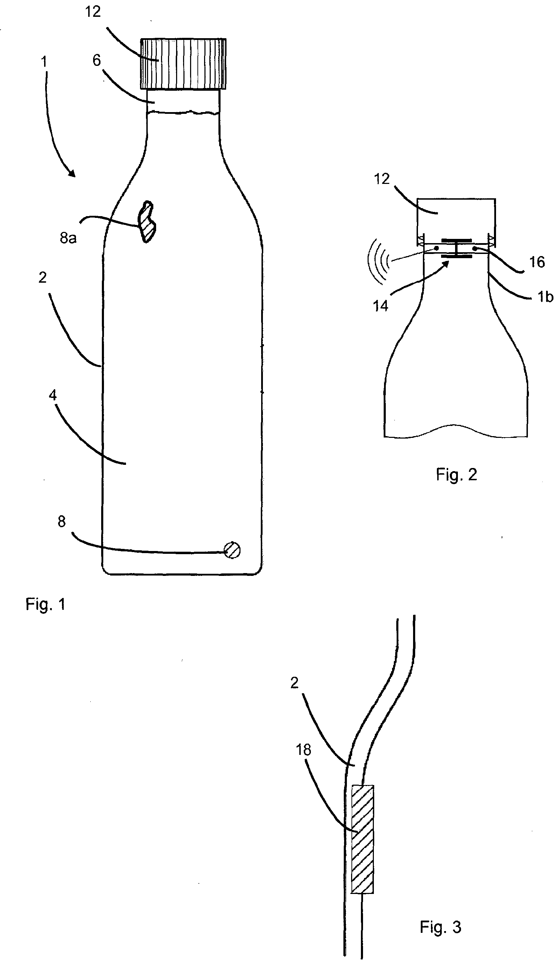

Fig. 1 zeigt eine schematische Darstellung eines erfindungsgemäßen Behältnisses 1. Dieses Behältnis weist dabei einen umlaufenden Grundkörper 2 auf sowie einen Boden. Innerhalb des Behältnisses ist eine Flüssigkeit 4 angeordnet.

Weiterhin weist das Behältnis einen Verschluss 12, wie hier einen Schraubverschluss, auf, der das Behältnis flüssigkeitsdicht verschließt.

Innerhalb des Behältnisses bzw. der Flüssigkeit befindet sich ein bewusst eingebrachter Fremdkörper 8. Dieser ist hier kreisförmig dargestellt, kann aber auch andere geometrische Gestalten aufweisen. Daneben wäre es auch möglich, einen weiteren Fremdkörper 8a an einer Innenwandung des Behältnisses anzuordnen. Auf diese Weise können auch solche Inspektionsvorgänge kontrolliert werden, welche auf Fehler an oder in der Wandung des Behältnisses ansprechen. Daneben könnten auch gezielt, beispielsweise an dem Grundkörper des Behältnisses, Fehler angebracht sein, wie beispielsweise Kratzer, Materialunregelmäßigkeiten und dergleichen. Auch wäre es möglich, dass in dem Behältnis eine Vielzahl von unterschiedlichen Fremdkörpern angeordnet ist, um gezielt unterschiedliche Eigenschaften einer Inspektionseinrichtung zu testen. Dabei wäre es möglich, dass diese Fremdkörper unterschiedliche auf Bewegungen des Behältnisses, wie z.B. Drehungen des Behältnisses um dessen Längsachse reagieren. Auch können diese Fremdkörper aus unterschiedlichen Materialien hergestellt sein.

Fig. 2 zeigt eine Detailansicht eines oberen Bereiches des Behältnisses 1. Dabei ist erkennbar, dass das Behältnis einen zweiten Verschluss 14 aufweist, der hier in einem Halsbereich 1 b des Behältnisses angeordnet ist. Bei diesem zweiten Verschlussmittel kann es sich um einen Spannkörper handeln, welcher, wie in Fig. 2 angedeutet ist, sich in Richtung der Mündung bzw. der Innenwandung der Mündung ausdehnt und damit ebenfalls das Behältnis sicher verschließt. Das Bezugszeichen 16 kennzeichnet grob schematisch eine Sendeeinrichtung, die beispielsweise ein Signal ausgeben kann, welches das Behältnis 1 identifiziert. Dabei kann es sich beispielsweise um einen RFID-Tag oder dergleichen handeln oder insbesondere eine Sendeeinrichtung, die durch eine externe Energiequelle aktiviert wird. Auf diese Weise kann beispielsweise in einer nachgeordneten Maschine dieses Element angesprochen werden und ein Signal ausgeben, welches bewirkt, dass das ungewollt in den Ausgangsstrom der Behältnisse gelangte Testbehältnis wieder aussortiert wird.

Fig. 3 zeigt eine Detaildarstellung des Grundkörpers 2 bzw. dessen Wandungsbereichs. Man erkennt, dass hier ein Element 18 in der Wandung eingebracht ist. Dieses Element kann, wie oben erwähnt, wiederum zum Testen von Inspektionseinrichtungen dienen. Daneben kann jedoch dieses Element 18 auch ein Informationsträger sein, der beispielsweise eine Markierung aufweist, bzw. über den eine Markierung oder eine Information auslesbar ist, welche das Testbehältnis eindeutig identifiziert.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Behältnis
- 1 b: Halsbereich
- 2: Grundkörper
- 4: Flüssigkeit
- 8: Fremdkörper
- 8a: weiterer Fremdkörper
- 12: Verschluss
- 14: zweiter Verschluss
- 16: Sendeeinrichtung
- 18: Element

## Patentansprüche

1. Testbehältnis (1) zum Überprüfen von Behältnis-Inspektionsmaschinen, welche Inspektionsmaschinen geeignet sind, wenigstens eine erste Gattung an Behältnissen auf das Vorhandensein von Fremdkörpern zu untersuchen, mit einem Grundkörper (2) in dem eine Flüssigkeit (4) angeordnet ist, mit einer Mündung (6), über welche die Flüssigkeit in das Behältnis einfüllbar ist, mit einem ersten Verschluss (12), mittels dem das Behältnis verschlossen ist, wobei in dem Behältnis (1) ein von der Inspektionsmaschine erfassbarer Fremdkörper (8) angeordnet ist,
**dadurch gekennzeichnet, dass**
das Behältnis (1) und/oder die darin angeordnete Flüssigkeit ein Erkennungsmittel aufweist, welches von einem Benutzer und/oder einer Erkennungseinrichtung erfassbar ist, um so das Testbehältnis als sich von einem anderen zu inspizierenden Behältnis der Gattung zu unterscheiden, wobei sich in der Flüssigkeit eine weitere Substanz befindet, welche ein Unterscheiden des Behältnisses auf Basis eines Geruchs und/oder Geschmacks der Flüssigkeit ermöglicht, so dass vorteilhaft eine Vergällung der Flüssigkeit vorgenommen wird, um einen versehendlichen genuss des Inhalts des Testbehältnisses durch einen ßenutzer zu vermeiden.

2. Testbehältnis (1) nach Anspruch 1,
**dadurch gekennzeichnet, dass**
die weitere Substanz aus einer Gruppe von Substanzen ausgewählt ist, welche Aceton, Rohpyridin, Kristallviolett, Fuselöl, Isopropylalkohol, Methyethylketon, Methylisopropylenketon, Ethyl-sec-amylketon, Holzgeist, Steinöl Methanol, Tiophen, Mischungen dieser Substanzen und dergleichen enthält.

3. Testbehältnis (1) nach wenigstens einem der vorangegangenen Ansprüche,
**dadurch gekennzeichnet, dass**
in dem Behältnis mehrere Fremdkörper mit zueinander unterschiedlichen physikalischen Eigenschaften angeordnet sind.

4. Testbehältnis (1) nach wenigstens einem der vorangegangenen Ansprüche,
**dadurch gekennzeichnet, dass**
wenigstens ein Fremdkörper gegenüber dem Behältnis fixiert ist.

5. Testbehältnis (1) nach wenigstens einem der vorangegangenen Ansprüche,
**dadurch gekennzeichnet, dass**
das Testbehältnis ein Identifikationselement aufweist, welches von einer Maschine erkennbar ist.

6. Testbehältnis (1) nach wenigstens einem der vorangegangenen Ansprüche,
**dadurch gekennzeichnet, dass**
das Behältnis (1) einen zweiten Verschluss (14), der das Behältnis zusätzlich zu dem ersten Verschluss verschließt.

7. Testbehältnis (1) nach Anspruch 6,
**dadurch gekennzeichnet, dass**
der zweite Verschluss innerhalb eines Mündungsbereichs (1a) des Testbehältnisses angeordnet ist.

8. Testbehältnis (1) nach wenigstens einem der vorangegangenen Ansprüche,
**dadurch gekennzeichnet, dass**
die Flüssigkeit wenigstens eine Substanz mit einer keimabtötenden Wirkung aufweist.

9. Testbehältnis (1) nach wenigstens einem der vorangegangenen Ansprüche,
**dadurch gekennzeichnet, dass**
das Testbehältnis (1) ein wenigstens teilweise unter sterilen Bedingungen hergestelltes Testbehältnis (1) ist.

## Claims

1. Test container (1) for checking container inspection machines, which inspection machines are suitable for examining at least a first category of containers for the presence of foreign bodies, with a main body (2) in which a liquid (4) is disposed, with a mouth (6) via which the liquid is able to be introduced into the container, with a first closure (12) by means of which the container is closed, wherein a foreign body (8) which can be detected by the inspection machine is disposed in the container (1),
**characterised in that**
the container (1) and/or the liquid disposed therein has a detection means which can be detected by a user and/or a detection device in order thus to distinguish the test container *per se* from another container of the category to be inspected, wherein a further substance is located in the liquid, making it possible to differentiate the container on the basis of a smell and/or taste of the liquid, so that the fluid is advantageously denaturing in order to avoid inadvertent consumption of the contents of the test container by a user.

2. Test container (1) according to claim 1,
**characterised in that**
the further substance is selected from a group of substances containing acetone, raw pyridine, crystal violet, fusel oil, isopropyl alcohol, methyl ethyl ketone, methyl isopropylene ketone, ethyl sec-amyl ketone, wood alcohol, rock oil, methanol, thiophene, mixtures of these substances and the like.

3. Test container (1) according to at least one of the preceding claims, **characterised in that**
several foreign bodies with physical characteristics which differ from one another are disposed in the container.

4. Test container (1) according to at least one of the preceding claims,
**characterised in that**
at least one foreign body is fixed relative to the container.

5. Test container (1) according to at least one of the preceding claims,
**characterised in that**
the test container has an identification element which can be recognised by a machine.

6. Test container (1) according to at least one of the preceding claims,
**characterised in that**
the container (1) has a second closure (14) which closes the container in addition to the first closure.

7. Test container (1) according to claim 6,
**characterised in that**
the second closure is disposed inside a mouth region (1 a) of the test container.

8. Test container (1) according to at least one of the preceding claims,
**characterised in that**
the liquid has at least one substance with a germ-killing action.

9. Test container (1) according to at least one of the preceding claims,
**characterised in that**
the test container (1) is a test container (1) produced at least partially under sterile conditions.

## Revendications

1. Récipient d'essai (1) pour le test de machines à inspecter des récipients, lesdites machines à inspecter étant aptes à détecter la présence de corps étrangers dans au moins un premier type de récipients, avec un corps de base (2) présentant un liquide (4), avec une embouchure (6) par laquelle le liquide peut être versé dans le récipient, avec un premier bouchon (12) au moyen duquel le récipient étant bouché, dans lequel un corps étranger (8) détectable par la machine à inspecter étant placé dans le récipient (1),
**caractérisé en ce que**
le récipient (1) et/ou le liquide qu'il contient présentent un moyen d'identification détectable par un utilisateur et/ou par un dispositif d'identification pour distinguer le récipient d'essai en tant que tel d'un autre récipient du type à inspecter, dans lequel une autre substance se trouve dans le liquide, laquelle permet une différenciation du récipient sur la base d'une odeur et/ou d'un goût du liquide, de sorte qu'il est avantageusement procédé à une dénaturation du liquide pour éviter une consommation accidentelle du contenu du récipient d'essai par un utilisateur.

2. Récipient d'essai (1) selon la revendication 1,
**caractérisé en ce que**
l'autre substance est sélectionnée dans un groupe de substances comprenant l'acétone, la pyridine brute, le violet de cristal, l'huile de fusel, l'alcool isopropylique, la méthyléthylcétone, la méthylisopoylènecétone, l'éthylamylcétone (secondaire), l'alcool de bois, l'huile de roche, le méthanol, le thiophène, des mélanges de ces substances et similaires.

3. Récipient d'essai (1) selon au moins une des revendications précédentes,
**caractérisé en ce que**
plusieurs corps étrangers à propriétés physiques différentes l'un par rapport à l'autre sont placés dans le récipient.

4. Récipient d'essai (1) selon au moins une des revendications précédentes,
**caractérisé en ce qu'**
au moins un corps étranger est fixé par rapport au récipient.

5. Récipient d'essai (1) selon au moins une des revendications précédentes,
**caractérisé en ce que**
le récipient d'essai comporte un élément d'identification reconnaissable par une machine.

6. Récipient d'essai (1) selon au moins une des revendications précédentes,
**caractérisé en ce que**
le récipient (1) comporte un deuxième bouchon (14) bouchant le récipient en plus du premier bouchon.

7. Récipient d'essai (1) selon la revendication 6,
**caractérisé en ce que**
le deuxième bouchon est disposé à l'intérieur d'une zone d'embouchure (1 a) du récipient d'essai.

8. Récipient d'essai (1) selon au moins une des revendications précédentes,
**caractérisé en ce que**
le liquide comprend au moins une substance ayant un effet bactéricide.

9. Récipient d'essai (1) selon au moins une des revendications précédentes,
**caractérisé en ce que**
le récipient d'essai (1) est un récipient d'essai (1) fabriqué au moins en partie sous des conditions stériles.
